# EUROPÄISCHE PATENTANMELDUNG

(11) **EP 3 893 343 A1**
(43) Veröffentlichungstag der Anmeldung: **13.10.2021**
(21) Anmeldenummer: 21166129.3
(22) Anmeldetag: 31.03.2021
(51) Int. Cl.: H02G 3/22, H02G 15/007, F16L 3/22

(54) **VORRICHTUNG ZUR DURCHFÜHRUNG UND ZUGENTLASTUNG VON STRÄNGEN**

(30) Priorität: 08.04.2020 DE 102020204526
(71) Anmelder: icotek project GmbH & Co. KG, 73569 Eschach (DE)
(72) Erfinder: Ehmann, Valentin, 73525 Schwäbisch Gmünd (DE); Ehmann, Bruno, 73563 Mögglingen (DE)
(74) Vertreter: Dr. Weitzel & Partner

(57) **Zusammenfassung**

Die Erfindung betrifft eine Vorrichtung zur Durchführung und Zugentlastung von Strängen durch einen Wanddurchbruch mit einem um den und/oder zumindest teilweise in dem Wanddurchbruch angeordneten Rahmen, mit wenigstens einer den Strang umschließenden Zugentlastungstülle, welche zumindest formschlüssig in dem Rahmen aufgenommen ist, wobei der Rahmen wenigstens zwei lösbar verbundene Rahmenteile aufweist, zwischen welchen die Zugentlastungstülle im verbundenen Zustand der Rahmenteile direkt oder mittelbar verpresst ist.

Die Erfindung ist dadurch gekennzeichnet, dass die Zugentlastungstülle wenigstens zwei Abschnitte aufweist, welche im verpressten Zustand bei eingelegtem Strang voneinander beabstandet oder allenfalls über wenigstens einen elastischen Bereich verbunden sind, so dass der Kraftfluss zwischen dem wenigstens einen ersten Abschnitt und dem wenigstens einen anderen Abschnitt über den Strang verläuft.

## Beschreibung

Die Erfindung betrifft eine Vorrichtung zur Durchführung und Zugentlastung von Strängen, insbesondere von Kabeln oder Leitungen, durch einen Wanddurchbruch nach der im Oberbegriff von Anspruch 1 näher definierten Art.

Eine gattungsgemäße Vorrichtung beschreibt unter dem Titel Kabeldurchführung beispielsweise die WO 01/42046 A2. Bei dem dortigen Aufbau handelt es sich um einen Rahmen, welcher hier zweiteilig ausgeführt ist. In diesem Rahmen können an vorgesehenen Steckplätzen formschlüssig sogenannte Tüllen eingelegt werden, welche ihrerseits aus einem elastischen Material bestehen und über einen Schlitz so ausgebildet sind, dass diese seitlich aufklappbar sind. Damit kann in eine beispielsweise zentral in der Tülle angeordnete Öffnung ein Strang, z.B. ein Kabel, eingelegt und die Tülle um dieses herum wieder zugeklappt und in den Rahmen gesteckt werden. Dies hat den entscheidenden Vorteil, dass auch vorkonfektionierte Kabel mit bereits montierten Steckern, welche nicht durch die Öffnung der Tülle hindurchgefädelt werden könnten, problemlos eingesetzt werden können. Die Aufgabe der Tülle ist es dabei, den Wanddurchbruch bzw. ihren Steckplatz in dem Rahmen entsprechend abzudichten und auch das Kabel mit den ihre zentrale Öffnung umgebenden Teilen sicher zu halten und den Bereich zwischen dem Kabel und der Tülle zuverlässig abzudichten. Die Tülle ist dafür aus einem relativ weichen elastischen Werkstoff ausgebildet, welcher beispielsweise eine Härte von weniger als 75 Shore-A(15s) aufweist. Dabei sind diese Tüllen auch in der Lage, eine Zugentlastung für die Kabel zu realisieren. Werden die Zugkräfte jedoch größer, kann durch die Elastizität der Tülle das Kabel nicht unter allen Umständen sicher und zuverlässig gehalten werden. Dies stellt einen Nachteil derartiger Aufbauten dar.

Anstelle des zweiteiligen verschraubbaren Rahmens der genannten WO-Schrift kann der Rahmen beispielsweise auch über eine Clipverbindung verschlossen sein. Für die verschiedenen Ausgestaltungen des Rahmens kann rein beispielhaft auf die DE 10 2018 205 702 A1 hingewiesen werden. Auch andere Formen des Rahmens sind denkbar. Eine weitere Art eines Rahmens kann auch eine sogenannte Kabelverschraubung sein, bei welcher der Rahmen teilweise in dem Wanddurchbruch angeordnet ist. Ein Beispiel hierfür kann die

WO 2018/210892 A1 sein.

All diese Aufbauten ermöglichen -wie erwähnt- eine hohe Dichtheit des Aufbaus und eine relativ gute Zugentlastung, welche jedoch sehr starken Kräften, welche auf die Stränge, z.B. Kabel, einwirken, nicht in allen Situationen widerstehen kann. Eine Lösung, um dieser Problematik abzuhelfen, ist prinzipiell aus der DE 44 41 478 A1 bekannt. An die eigentliche Tülle wird dabei eine Art Fortsatz angebracht, welcher dann Elemente aufweist oder aufnehmen kann, die ergänzend zur Tülle die Zugentlastung des Kabels verwirklichen. Beispielsweise kann das Kabel über einen Kabelbinder an dem Fortsatz fixiert werden. Der Aufbau hat dabei den gravierenden Nachteil, dass er wenig Flexibilität bietet, und dass er über den eigentlichen Aufbau überstehende Fortsätze aufweist, welche bei der üblichen Anwendung, nämlich dem Einführen von Strängen durch Wandöffnungen in Schaltschränken, Maschinensteuerungen oder dgl. einen gravierenden Nachteil darstellt, da hier eine möglichst wenig verwinkelte Oberfläche hinsichtlich der Verschmutzung und der Gefahr einer eventuellen Beschädigung von entscheidendem Vorteil ist.

Die Aufgabe der vorliegenden Erfindung besteht nun darin, eine verbesserte Vorrichtung zur Durchführung und Zugentlastung von Kabeln anzugeben, welche vorzugsweise mit bestehenden Rahmen einsetzbar ist.

Erfindungsgemäß wird diese Aufgabe durch eine Vorrichtung mit den Merkmalen im Anspruch 1, und hier insbesondere im kennzeichnenden Teil des Anspruchs 1 gelöst.

Den Erfindern hat sich gezeigt, dass eine neuartige Tülle, welche zur formschlüssigen Aufnahme in dem Rahmen ausgebildet ist, diese Aufgabe ideal lösen kann. Wie bisher ist der Rahmen aus wenigstens zwei lösbar verbundenen Rahmenteilen aufgebaut, zwischen welchen die Tülle im verbundenen Zustand der Rahmenteile direkt oder mittelbar, z.B. über eine weitere Tülle in derselben Aufnahmekammer des Rahmens für die Tüllen, verpresst ist. Die Tülle ist weiterhin formschlüssig in dem Rahmen aufgenommen, vorzugsweise -aber nicht zwingend - quer zur Axialrichtung bzw. Laufrichtung des eingelegten Strangs, um auf die Tülle übertragene Zugkräfte, die auf den Strang wirken auf den Rahmen und über diesem in die Wand abzuleiten.

Erfindungsgemäß weist die Zugentlastungstülle wenigstens zwei Abschnitte auf, welche im verpressten Zustand bei eingelegtem Strang voneinander beabstandet oder allenfalls über wenigstens einen elastischen Bereich verbunden sind. Damit verläuft der Kraftfluss zwischen dem wenigstens einen ersten Abschnitt und dem wenigstens einen anderen Abschnitt immer ganz oder zumindest größtenteils über den Strang. Damit wird eine sehr gute Zugentlastung, auch bei hohen Kräften die ggf. an dem Strang ziehen, erreicht.

Dadurch, dass die Abschnitte im verpressten Zustand voneinander beabstandet ausgebildet sind, ist sichergestellt, dass diese auf den Strang, also beispielsweise den Mantel eines Kabels, gedrückt werden und sich hinsichtlich ihres Weges beim Verpressen nicht gegenseitig blockieren. Alternativ dazu kann, insbesondere bei einer einteiligen aufklappbaren Ausgestaltung der Zugentlastungstülle ein Aufbau vorgesehen werden, bei dem die Abschnitte der Zugentlastungstülle über elastische Bereiche verbunden sind. Solche elastischen Bereiche nehmen dabei quasi keine Kräfte auf, so dass das Prinzip der Weiterleitung der Kräfte ganz oder zumindest größtenteils über den Strang auch hier gewahrt bleibt. Auch eine C-förmige Ausgestaltung der Tülle würde dieses Prinzip wahren, da auch hier mit zunehmender Kraft ein zunehmendes Zusammenpressen der oberen und unteren Abschnitte des C möglich ist.

Eine vorteilhafte Ausgestaltung der erfindungsgemäßen Vorrichtung kann es vorsehen, dass der Spalt zwischen den wenigstens zwei Abschnitten in einer Ebene parallel oder schräg zur Axialrichtung des eingelegten Strangs verläuft. Die Abschnitte sind also z.B. mittig analog zur Teilung des Rahmens geteilt. Der Spalt ist dann in Axialrichtung des eingelegten Strangs durchlaufend. Soll dies verhindert werden um eine Durchsicht und das direkte Eindringen von Schmutz zu verhindern, kann die Teilung auch in einer schrägen Ebene vorgesehen sein. Der Spalt kann dann z.B., bezüglich des Schaltschrankes als bevorzugte Anwendung, von außen unten nach innen oben verlaufen. Die Ebene mit dem Spalt steht also schräg, nicht jedoch senkrecht auf einer der Ebenen in der die Axialrichtung liegt.

Die elastischen Bereiche können gemäß einer sehr günstigen Weiterbildung der Erfindung beispielsweise Filmscharniere sein, so dass die Elastizität hier über die dünnen Wandstärken des Materials erreicht wird. Dabei ist der elastische Bereich vorzugsweise in mehrere einzelne Filmscharniere aufgeteilt sind, um so einerseits ein Aufklappen der Abschnitte der Zugentlastungstülle zu erlauben, was das Einlegen von vorkonfektionierten Kabeln ebenso ermöglicht, wie die Ausgestaltung der Zugentlastungstülle aus mehreren Teilen. Wenn beispielsweise zwei Abschnitte über Filmscharniere miteinander verbunden sind, hat dies jedoch den entscheidenden Vorteil, dass die Teile beieinander bleiben und nicht bei der Montage teilweise verlegt werden können. Das Filmscharnier selbst, welches vorzugsweise entlang der Axialrichtung des Strangs, also beispielsweise der Laufrichtung des Kabels oder der Leitung in mehrere Filmscharniere unterteilt ausgebildet sein kann, ist dabei so elastisch, dass einerseits ein Aufklappen der Abschnitte gegeneinander, um beispielsweise das Kabel, insbesondere das vorkonfektionierte Kabel, aufzunehmen, möglich ist. Andererseits erlaubt es ein Verpressen der Bauteile gegeneinander quasi ausschließlich über den Strang, da das Filmscharnier einem solchen Verpressen keinen nennenswerten Widerstand entgegenstellt. Auf der dem Filmscharnier gegenüberliegenden Seite kann dann auch im verpressten Zustand ein entsprechender Abstand verbleiben, um, wie oben bereits erwähnt ein Aneinanderliegen der Abschnitte der Zugentlastungstülle beim Verpressen zu vermeiden, sodass die gesamte Kraft, welche beim Verpressen der Teile des Rahmens auf die Zugentlastungstülle wirkt, an den Strang bzw. seine Ummantelung weitergegeben wird, um eine ideale Zugentlastung zu gewährleisten.

Als Alternative oder insbesondere auch als Ergänzung sowie ggf. auch zum Schutz der Filmscharniere kann es gemäß einer sehr vorteilhaften Ausgestaltung der Erfindung vorgesehen sein, dass die wenigstens zwei Abschnitte von einem weicheren und/oder elastischeren Material als dem aus dem sie bestehen, umgeben und durch dieses Material aufklappbar verbunden sind. Damit kann ein weicheres und/oder elastischeres Material, insbesondere das einer herkömmlichen Dichttülle, das härtere Material der Abschnitte ganz oder bevorzugt teilweise umgeben. Dadurch kann einerseits die Verbindung der Abschnitte über den elastischen Bereich und andererseits eine zusätzliche Dichtwirkung bei weiterhin sehr guter Zugentlastung durch die Abschnitte erreicht werden. Da die gesamte Zugentlastung über die härteren Abschnitte erreicht wird, wäre auch eine sehr viel weicheres Material als bei Dichttüllen bisher üblich denkbar.

Dabei kann es vorgesehen sein, dass die wenigstens zwei Abschnitte in korrespondierende Öffnungen des weicheren und/oder elastischeren Materials eingesteckt oder auch ganz oder bevorzugt teilweise vom diesem umspritzt sind. Das weichere und/oder elastischere Material bildet somit die Verbindung aus und kann das Filmscharnier unterstützen oder auch ersetzen. Es kann außerdem für die Verbindung zum Rahmen sorgen, so dass die beiden Abschnitte als härtere und/oder steifere Teile quasi Öffnungen in einer herkömmliche Dichttülle eingesetzt und/oder von dieser teilweise ummantelt werden.

Gemäß einer sehr günstigen Ausgestaltung hiervon kann das weichere und/oder elastischere Material im verpressten Zustand dichtend mit dem Rahmen, mit sich selbst entlang eines Schlitzes zum Aufklappen und/oder weiteren Zugentlastungstüllen in dem Rahmen zusammenwirken. So entsteht eine Art Kombitülle, die die abdichtenden Eigenschaften der Dichttülle mit denen einer reinen Zugentlastungstülle kombiniert, indem sie die härteren und/oder steiferen Abschnitte aufnimmt, welche die beim Verpressen auftretenden Kräfte über den Strang direkt aneinander weitergeben, während das weichere und/oder elastische Material zur Abdichtung mit sich selber, dem Schlitz, dem Umfang des Strangs und dem Rahmen verpresst wird.

Ein sehr einfache und kostengünstige Alternative zu einer solchen in der Herstellung komplexen Kombitülle ist eine reine Zugentlastungstülle, die durch die wenigstens zwei Abschnitte gebildet ist, ohne dass diese von einem weiteren Material ummantelt oder in eine solches eingesteckt sind. Idealerweise sind dabei die Abschnitte über wenigstens ein Filmscharnier verbunden, sie müssen dies jedoch nicht sein.

Im Vergleich zu dem Material der herkömmlichen Dichttülle sind die Abschnitte vorzugsweise härter und/oder steifer. Sie können dabei gemäß einer sehr günstigen Weiterbildung der Erfindung eine Härte von mehr als 75 Shore-A(15s) aufweisen. Durch die höhere Härte der Abschnitte werden höhere Klemmkräfte auf den Strang beim Einlegen und Verpressen einer solchen Zugentlastungstülle, beispielsweise beim Verschrauben oder Verclippen der Rahmenteile untereinander, erzielt. Geeignete Materialien für eine derartige Zugentlastungstülle können beispielsweise TPE, hartes EPDM oder NBR oder auch weiches PP oder weiches PA sein. Auch andere Materialien sind natürlich möglich, die genannten sind jedoch im Bereich von Kabeldurchführungen gängige Materialien, die entsprechend einfach in der Produktion nutzbar sind, ohne dass bei Ihrer Verarbeitung neues Know-how nötig wäre oder dergleichen.

Die Shore-Härte wird insbesondere mit einem Shorehärteprüfgerät ermittelt. Die Messung erfolgt gemäß der ISO 868 in der zum Prioritätstag gültigen Fassung. Bei der Shorehärte A wird dazu die zu messende Probe mit einer Kraft von 12,5 Newton auf den Messtisch gedrückt. Die Probe mit mindestens 6mm dicke ist auf 21-25°C temperiert. Die Messung erfolgt mit einer Nadel mit abgestumpfter Spitze. Die Stirnfläche des so gebildeten Kegelstumpfs hat einen Durchmesser von 0,79 Millimetern, der Öffnungswinkel beträgt 35°. Das Auflagemasse beträgt 1 kg, die Haltezeit 15 s. Die Messwerte werden typischerweise mit Shore A(15s) oder A/15s bezeichnet.

Eine weitere sehr günstige Ausgestaltung der erfindungsgemäßen Vorrichtung sieht es ferner vor, dass im Bereich des Kontakts zwischen dem Strang und den Abschnitten Vorsprünge vorgesehen sind. Diese Vorsprünge können in axialer Richtung des Strangs ausgebildet sein, um diesen zuverlässig zu positionieren. Sie können gemäß einer sehr vorteilhaften Weiterbildung der Idee auch quer zur axialen Richtung des Strangs ausgebildet sein, um sich bis zu einem gewissen Grad in die Ummantelung des Strangs einzugraben und die Zugentlastung dadurch weiter zu verbessern, da der Strang stärker mit den Abschnitten beim Verschließen des Rahmens verpresst wird und dadurch höhere Zugentlastungskräfte über die Abschnitte auf den Rahmen abgeleitet werden können. Gemäß einer weiteren sehr günstigen Ausgestaltung dieser Idee können die quer zur Axialrichtung des Strangs verlaufenden Vorsprünge über den Umfang mehrfach durchbrochen sein, um so die Reibung durch eine Art Verkrallen zwischen dem Strang bzw. seiner Ummantelung und den Abschnitten noch weiter zu steigern.

Eine außerordentlich günstige Weiterbildung der erfindungsgemäßen Vorrichtung sieht es nun ferner vor, dass in Axialrichtung des eingelegten Strangs vor oder nach der hier vorzugsweise ausschließlich aus den Abschnitten ausgebildeten Zugentlastungstülle eine Dichttülle zur formschlüssigen Aufnahme in dem Rahmen und zur Anlage an dem Strang vorgesehen ist, welche eine Härte von weniger als 75 Shore-A(15s) aufweist. Ergänzend zu der - hier bevorzugt reinen - Zugentlastungstülle, vorzugsweise mit einer oder mehreren der oben beschriebenen Eigenschaften kann also eine weichere Dichttülle, insbesondere eine Dichttülle, wie sie aus dem eingangs genannten Stand der Technik bekannt ist, vorgesehen sein. Eine solche Dichttülle, welche gemäß einer vorteilhaften Ausgestaltung der Vorrichtung einteilig und entlang der Achse in Richtung des Strangs aufklappbar ist, erlaubt dann ergänzend zu der Zugentlastungstülle, welche nur eine geringe Dichtwirkung, beispielsweise gegen Staub oder groben Schmutz erlaubt, eine entsprechend gute Abdichtung, beispielsweise in der im eingangs genannten Stand der Technik beschriebenen Art, sodass Dichtheiten bis IP 67 problemlos realisiert werden können. Der Rahmen weist dann typischerweise zwei in Axialrichtung des eingelegten Strangs hintereinander angeordnete Kammern auf, welche einerseits zur Aufnahme der Zugentlastungstüllen für eine sehr zuverlässige Zugentlastung auch bei hohen Kräften an den Strängen ausgebildet sind, und welche andererseits zur Aufnahme der Dichttüllen ausgebildet sind.

Unabhängig davon, ob zwei Tüllen hintereinander und/oder mehreren Tüllen nebeneinander angeordnet sind, ist es selbstverständlich möglich, herkömmliche Dichttüllen mit einer moderaten Zugentlastungswirkung auch in einem Rahmen mit den erfindungsgemäßen Zugentlastungstüllen mit hoher Zugentlastungswirkung zu kombinieren, wenn beispielsweise Stränge bzw. Kabel mit unterschiedlichen Anforderungen an die Zugentlastung nebeneinander über den Rahmen durch den Wanddurchbruch hindurchgeführt werden sollen.

Weitere vorteilhafte Ausgestaltungen der erfindungsgemäßen Vorrichtung ergeben sich auch aus den Ausführungsbeispielen, welche nachfolgend unter Bezugnahme auf die Figuren näher dargestellt sind.

Dabei zeigen:
- Fig. 1: eine dreidimensionale Ansicht einer Ausführungsform der erfindungsgemäßen Vorrichtung mit einer ersten Rahmenform und eingelegten Strängen;
- Fig. 2: eine Ausführungsform der erfindungsgemäßen Vorrichtung mit einer zweiten Rahmenform und eingelegten Strängen;
- Fig. 3: eine Ansicht der Vorrichtung gemäß Fig. 2 von der gegenüberliegenden Seite aus;
- Fig. 4: eine Darstellung des in Fig. 1 gezeigten Aufbaus ohne die eingelegten Stränge;
- Fig. 5: eine Darstellung der Vorrichtung gemäß Fig. 3 ohne die eingelegten Stränge;
- Fig. 6: eine dreidimensionale Ansicht einer möglichen Ausführungsform einer Zugentlastungstülle gemäß der Erfindung aus einer ersten Blickrichtung;
- Fig. 7: die Zugentlastungstülle gemäß Fig. 6 aus einer anderen Blickrichtung;
- Fig. 8: eine Ausführungsvariante der erfindungsgemäßen Vorrichtung analog zu der in Fig. 1 in einer Explosionsdarstellung;
- Fig. 9: die Ausführungsvariante gemäß Fig. 2 in einer Explosionsdarstellung;
- Fig. 10: eine weitere mögliche Ausführungsform einer Zugentlastungstülle in Form einer Kombitülle ohne eingelegten Strang;
- Fig. 11: eine Ansicht analog zu der in Figur 10 mit eingelegtem Strang;
- Fig. 12: eine mögliche Ausführungsform der Abschnitte zur Ummantelung in einer alternativen Variante der Kombitülle;
- Fig. 13: die alternative Variante der Kombitülle mit den Abschnitten aus Figur 12;
- Fig. 14: eine alternative Ausführungsform der Zugentlastungstülle analog zu der in Figur 6 und 7; und
- Fig. 15: eine weitere alternative Ausführungsform der Zugentlastungstülle analog zu der in Figur 6 und 7, hier zur Aufnahme von vier Strängen.

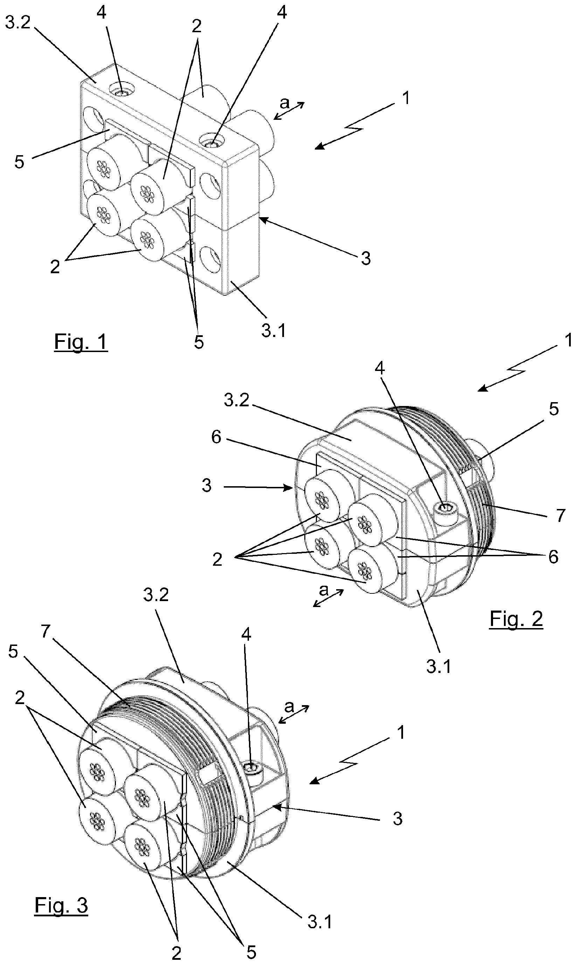

In der Darstellung der Fig. 1 ist eine Vorrichtung 1 zur Durchführung und Zugentlastung von Strängen 2, hier beispielsweise von vier Kabeln zu erkennen. Diese umfasst einen Rahmen 3 mit einem unteren Rahmenteil 3.1 und einem oberen Rahmenteil 3.2, welche hier rein beispielhaft miteinander über Schrauben 4 verbunden sind. Eine Verbindung beispielsweise durch Verclippen, durch einen Spannhebel oder dergleichen wäre ebenso denkbar. Der Rahmen 3, welcher beispielsweise in der Art ausgeführt ist, wie es in der eingangs erwähnten WO 01/42046 A2 der Fall ist, weist nun mehrere Steckplätze bzw.

Aufnahmekammern für Tüllen auf. Die Tüllen, welche dann ihrerseits die Kabel als beispielhafte Stränge 2 aufnehmen, sind in dem Ausführungsbeispiel der Fig. 1 allesamt als reine Zugentlastungstüllen 5 ausgeführt, auf deren Aufbau später noch im Detail eingegangen wird.

Der Aufbau in Fig. 2 zeigt eine alternative Form des Rahmens 3, ebenfalls mit einem Rahmenunterteil 3.1 und einem Rahmenoberteil 3.2, welche hier ebenfalls rein beispielhaft über Schrauben 4 miteinander verbunden sind. Der Aufbau kann sich prinzipiell beispielsweise an dem Rahmen in der eingangs erwähnten WO 2018/210892 A1 orientieren. Die einzelnen Kabel als Stränge 2 sind in dem Ausführungsbeispiel der Fig. 2 in Dichttüllen 6, wie sie aus dem eben genannten Stand der Technik bekannt sind, aufgenommen. In der Darstellung der Fig. 3, welche den Aufbau gemäß Fig. 2 von der Rückseite aus zeigt, erlaubt es dann die in Axialrichtung a der eingelegten Stränge 2 benachbart zu den Dichttüllen 6 angeordneten Zugentlastungstüllen 5 analog zur Darstellung des Rahmens 3 gemäß Fig. 1 zu erkennen.

Beide Rahmen 3 sind nur dafür vorgesehen, um ganz oder teilweise in Wanddurchbrüchen beispielsweise eines Schaltschranks einer Maschinensteuerung oder dergleichen angebracht oder eingesetzt zu werden, um so Stränge 2, insbesondere vorkonfektionierte Kabel durch diesen Wanddurchbruch hindurchzuführen. Der Rahmen 3 gemäß Fig. 1 wird dafür mit dem den Durchbruch umgebenden Teil der Wand entsprechend verschraubt, beispielsweise indem dort Löcher vorgesehen sind, welche ein Verschrauben mit dem Rahmen 3, typischerweise nach Zwischenlegen einer Dichtung, ermöglichen. Der Rahmen gemäß den Figuren 2 und 3 wird durch einen runden Wanddurchbruch hindurchgeführt und dann mittels einer Mutter, welche auf einen in den Figuren erkennbaren Gewindeabschnitt 7 des Rahmens 3 aufgeschraubt wird, befestigt.

Der entscheidende Aspekt der ersten Ausführungsform der Vorrichtungen 1 ist hier nun der Einsatz der Zugentlastungstüllen 5. Im Gegensatz zu den ebenfalls einsetzbaren Dichttüllen 6, welche so aus dem eingangs genannten Stand der Technik umfassend bekannt sind, sind die Zugentlastungstüllen 5 aus einem deutlich härteren Material ausgebildet. Das Material weist dabei vorzugsweise eine Shore-Härte von mehr als 80 Shore-A(15s) auf und kann beispielsweise TPE, ein hartes EPDM oder NBR oder auch ein weiches PP oder PA sein. Diese Kunststoffe eignen sich dann aufgrund der größeren Härte und ihrer speziellen nachfolgend noch beschriebenen Ausgestaltung in den Zugentlastungstüllen 5 ideal dazu, hohe Zugentlastungskräfte aufzunehmen und in den Rahmen 3 abzuleiten. Die Dichtwirkung steht jedoch im Vergleich zu den bisher eingesetzten Dichttüllen 6 zurück, weshalb diese Dichttüllen 6 mit den Zugentlastungstüllen 5 kombiniert werden können, wie es bereits aus den Darstellungen der Figuren 2 und 3 ersichtlich ist, und wie es später noch näher erläutert wird.

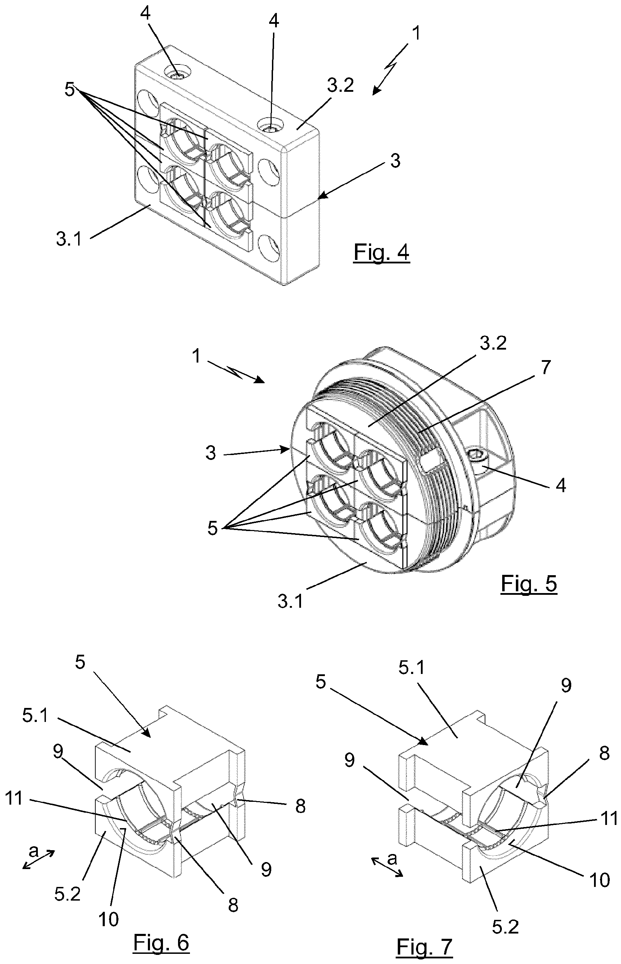

In den Figuren 4 und 5 sind nun Ansichten analog zu den Ansichten in den Figuren 1 und 3 dargestellt, hier jedoch ohne die Stränge 2. Dadurch sind die Zugentlastungstüllen 5 besser zu erkennen. Auf diese wird in den nachfolgenden Figuren 6 und 7, welche zwei unterschiedliche Ansichten der Zugentlastungstülle 5 in einer möglichen Ausführungsform zeigen, näher eingegangen.

Die Zugentlastungstüllen 5 sind vorzugsweise einteilig ausgeführt. Ein in den Darstellungen der Figuren 6 und 7 oberer Abschnitt 5.1 ist dabei im eingelegten Zustand, wie er in den Figuren 4 und 5 der Tüllen 5 in den Rahmen 3 zu erkennen ist, beabstandet von einem unteren Abschnitt 5.2 angeordnet. Dies lässt sich alternativ durch zwei oder mehr getrennte Teile der Zugentlastungstülle 5 realisieren. Bevorzugt sind -wie es hier dargestellt ist-, über die zwei Abschnitte 5.1 und 5.2, welche über zwei Filmscharniere 8 gegeneinander verklappt werden können. Sie lassen sich dann, vergleichbar wie die allseits bekannten Dichtungstüllen 6 um einen Strang 2, insbesondere um auch ein vorkonfektioniertes Kabel, herum schließen und formschlüssig in den Rahmen 3 einführen. Wie es aus den Darstellungen der Figuren 4 und 5 zu erkennen ist, sind die beiden Teile oder Abschnitte 5.1, 5.2 dabei weiterhin voneinander beabstandet, sodass diese beim Verpressen der Rahmenteile 3.1 und 3.2 über die Schrauben 4 oder andere Verschlussmöglichkeiten des Rahmens 3 nicht aneinander anstoßen und die gesamte Kraft auf den Strang 2 wirkt und diesen entsprechend gut einklemmt und so für eine gute Zugentlastung auch bei hohen Zugkräften sorgt.

Dafür weisen die Zugentlastungstüllen 5 zwischen ihren Abschnitten 5.1 und 5.2 seitlich relativ breite Spalte 9 auf, welche entlang der Axialrichtung a der später eingelegten Stränge 2 verlaufen. Auf der einen Seite ist der Spalt 9 gänzlich offen, auf der anderen Seite ist er lediglich durch die beiden Filmscharniere 8, wobei hier auch ein durchgehendes Filmscharnier oder mehrere Filmscharniere denkbar wären, unterbrochen. Die Filmscharniere 8 sind dabei in sich so elastisch, dass einerseits die Abschnitte 5.1 und 5.2 gegeneinander aufgeklappt werden können, und dass andererseits auch ein Verpressen der Abschnitte 5.1 und 5.2 senkrecht zur Laufrichtung der Spalte 9 möglich wird, ohne dass das Filmscharnier 8 dies beeinträchtigt. Mit dem Verpressen verringert sich die Breite der Spalte 9 und der Strang 2 wird zuverlässig in der Zugentlastungstülle 5 verpresst, ohne dass die Abschnitte 5.1 und 5.2 aneinander anstoßen.

Um die Zugentlastung noch weiter zu verbessern, können in einer Kontaktfläche 10 der Abschnitte 5.1, 5.2 mit dem Strang 2 Vorsprünge 11 vorgesehen sein. Diese können sowohl in Axialrichtung a des Strangs 2 verlaufen als auch quer dazu, also in Umfangsrichtung des Strangs 2. Insbesondere diese in Umfangsrichtung verlaufenden Vorsprünge 11 sorgen für eine weitere Verbesserung der Zugentlastung. Sie können dabei in Umfangsrichtung mehrfach unterbrochen sein, um so eine Art von Noppen oder Spitzen auszubilden und die Zugentlastung durch eine Art von Verkrallung zwischen den Vorsprüngen 11 und dem Mantel des Strangs 2 noch weiter zu verbessern.

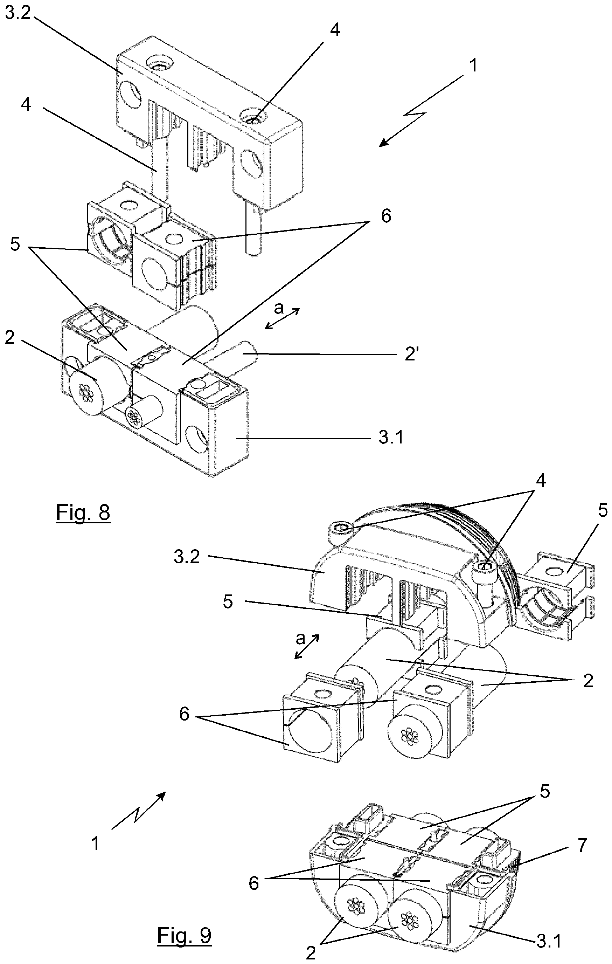

In den Darstellungen der Figuren 8 und 9 sind nun zwei Explosionsdarstellungen zu erkennen. Die eine zeigt einen Aufbau analog zu dem in Fig. 1 und 4. Anders als dort sind hier zwischen den beiden Rahmenteilen 3.1 und 3.2 des Rahmens 3 jedoch in den beiden rechten Aufnahmekammern Dichttüllen 6 eingelegt oder werden eingelegt, einmal für einen Strang 2' mit kleinerem Durchmesser als die bisher gezeigten Stränge 2 und einmal oben, ohne dass der Strang 2 hier dargestellt ist, für einen Strang mit einem Durchmesser analog zu dem in Fig. 1. Daneben in den beiden links übereinanderliegenden Aufnahmekammern sind jeweils Zugentlastungstüllen 5 vorgesehen. Zugentlastungstüllen 5 und Dichttüllen 6 können also in dem einen Rahmen 3 auch kombiniert zum Einsatz kommen, beispielsweise wenn bei den Strängen 2 mit größerem Durchmesser durch die Zugentlastung höhere Kräfte aufgenommen werden müssen als bei geringeren Durchmessern, wie dem des Strangs 2'.

In der Darstellung der Fig. 9 ist eine Explosionsdarstellung des in den Figuren 2, 3 und 5 gezeigten Aufbaus zu erkennen. Wie es bereits aus den Figuren 2 und 3 ersichtlich war, ist der Rahmen 3 bzw. sein Oberteil 3.2 und sein Unterteil 3.1 hier so ausgebildet, dass in Axialrichtung a der Stränge 2 zwei vorzugsweise identische Aufnahmekammern hintereinander angeordnet sind. In den in der Ansicht gemäß den Figuren 2 und 9 vorderen Aufnahmekammern sind dabei jeweils Dichttüllen 6 eingesetzt oder werden entsprechend eingesetzt, wie es in der Explosionsdarstellung der Fig. 9 zu erkennen ist. In den in der axialen Richtung a der Stränge 2 dahinterliegenden Aufnahmekammern, welche innerhalb des Gewindeabschnitts 7 angeordnet sein können, sind dann Zugentlastungstüllen 5 eingelegt. Hierdurch wird eine sehr gute Zugentlastung der Stränge 2 durch die Zugentlastungstüllen 5 in Kombination mit einer guten Abdichtung durch die Dichttüllen 6 erreicht. Da die Dichttüllen 6 hier nun keine Zugentlastung mehr leisten müssen, da diese ja von dem Härteren Material der Zugentlastungstüllen 5 bzw. deren Abschnitten 5.1 und 5.2 vollständig übernommen wird, können diese auch aus noch weicherem und flexiblerem Material als bisher üblich gefertigt werden.

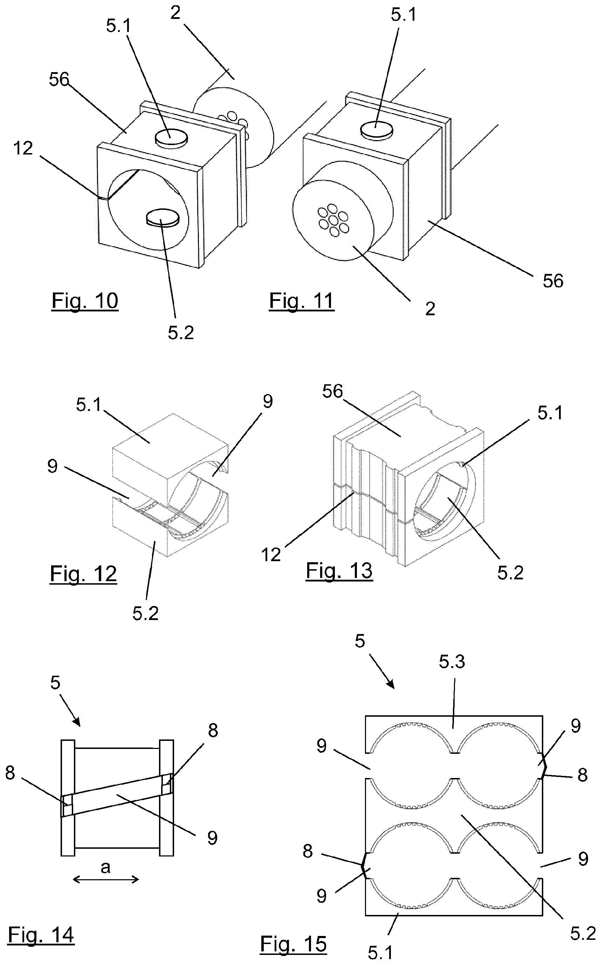

In den Darstellungen der Figuren 10 und 11 ist eine weitere Ausführungsform der Zugentlastungstülle 5 gezeigt. Diese ist dabei so aufgebaut, dass sie mit einer Dichttülle 6 entsprechend kombiniert ist. Diese Kombitülle trägt dabei das Bezugszeichen 56 und ist in Figur 10 ohne eingelegten Strang 2 und in Figur 11 mit eingelegtem Strang 2 zu erkennen. Die Kombitülle 56 wirkt dabei als Zugentlastungstülle 5 und Dichttülle 6 in einem, sodass auch bei Aufbauten ohne zwei Tüllen in Axialrichtung a des Strangs 2 hintereinander eine sehr gute Zugentlastung mit einer sehr guten Abdichtung kombiniert werden kann. Die Kombitülle 56 selbst ist aus einem entsprechend weichen und elastischen Material, beispielsweise aus dem Material, aus dem die Dichttüllen 6 herkömmlicher Weise hergestellt sind. Sie umfasst in ihrer einfachsten Ausführungsvariante, die in den Figuren 10 und 11 dargestellt ist, in der Ansicht der Figuren jeweils oben und unten eine Öffnung, beispielsweise eine kreisförmige Bohrung. In dieser sind die Abschnitte 5.1 und 5.2 zu erkennen. Sie sind in korrespondierenden Öffnungen des weicheren und/oder elastischeren Materials der Kombitülle aufgenommen und sind selbst als härtere Abschnitte 5.1, 5.2, beispielsweise aus weichen Polyamid oder dergleichen, ausgebildet.

Beim Verpressen der Rahmenteile 3.1 und 3.2 zueinander werden nun diese Abschnitte 5.1 und 5.2 entweder direkt, oder bei einem Aufbau mit mehreren solchen Kombitüllen über die Abschnitte 5.1, 5.2 in den benachbarten Tüllen miteinander verpresst, sodass die Kraft wiederum ausschließlich über die Abschnitte 5.1 und 5.2 sowie den Strang 2 oder die Stränge 2 übertragen werden, während die weicheren und elastischeren Bereiche um den Strang 2 herum, welche aus dem Material der eigentlichen Dichttülle 6 ausgeführt sind, lediglich für die Abdichtung sorgen. Die Zugentlastung wird also durch die hier als Stifte ausgeführten Abschnitte 5.1 und 5.2 realisiert, welches sich je nach Formgebung ihrer Oberflächen an dem Mantel des Strangs 2 anlegen und gegebenenfalls bis zu einem gewissen Grad diesen Mantel verformen und dadurch eine hohe Zugentlastung gewährleisten. Die Kombitülle 56 ist wie die Dichttülle 6 dabei aufklappbar ausgebildet. Ein Schlitz 12 der Kombitülle 56 wird dann wie der Schlitz 12 der reinen Dichttüllen 6, ebenso wie ihrer äußere Fläche, mit dem Rahmen beziehungsweise untereinander mit einer anderen Tülle, beziehungsweise im Bereich des Schlitzes 12 mit dem Material derselben Tülle verpresst. Dennoch lässt sich die Kombitülle 56 im ausgebauten Zustand aufklappen um vorkonfektionierte Stränge 2 einzulegen. Das weichere und/oder elastischere Material verbindet in diesem Fall die Abschnitte 5.1 und 5.2.

Dieses Konzept lässt sich auch mit Aufbauten ähnlich denen der Zugentlastungstülle 5 in den bisherigen Figuren realisieren. In der Figur 12 ist ein solches Inlay im selben Stil, wie die der Zugentlastungstülle 5 mit oberem Abschnitt 5.1 und unterem Abschnitt 5.2 entsprechend dargestellt. Dieses Inlay kann in eine entsprechende Öffnung eingesteckt werden, sich diese Öffnungen beim Verpressen durch ein Verformen des weicheren Materials quasi selbst schaffen oder kann vorzugsweise von dem ansonsten für die Dichttüllen 6 verwendeten Material teilweise umspritzt werden, um so die Kombitülle 56 gemäß der Darstellung in Figur 13 zu erhalten, welche im Wesentlichen vergleichbar zu der Kombitülle 56 der Figuren 10 und 11 ausgeführt ist. Anstelle der in Bohrungen beweglichen Stifte als Abschnitte 5.1 und 5.2 weist sie nun jedoch die aus der vorherigen Figur bekannten Abschnitte 5.1 und 5.2 auf. Auf das Filmscharnier 8 kann hier, wie es in der Darstellung der Figur 12 gezeigt ist, verzichtet werden, es könnte aber auch weiterhin vorhanden sein. Die beiden Abschnitte 5.1 und 5.2 sind in der Kombitülle 56 gemäß der Ausführung in Figur 13 weiterhin nur über das elastische Material, mit welchem sie umspritzt sind, entsprechend verbunden, sodass die Kraft auch hier wieder fast ausschließlich über den Strang 2 von dem einen Abschnitt 5.1 in den anderen Abschnitt 5.2 übertragen wird. Dennoch kann durch das vorhandene elastische Material, welches diese Kraftübertragung nicht nennenswert beeinflusst, weiterhin eine sehr gute Zugentlastung gewährleistet werden und gleichzeitig eine gute Abdichtung. Dabei werden zwar auch die Kräfte zu und von den Abschnitten 5.1, 5.2 in der Variante der Figur 13 über das elastische Material übertragen. Die dafür genutzten flächigen Bereiche oberhalb und Unterhalb der Abschnitte 5.1 und 5.2 wirken jedoch, was die Weiterleitung von Kräften angeht, ganz anders als das schmale seitliche "Band", welches quasi keine Kräfte parallel zum Strang zwischen den Abschnitten 5.1 und 5.2 weitergeben kann.

In der Darstellung der Figur 14 wird nochmals ein Aufbau aufgegriffen, welcher analog zur Darstellung in Figur 6 und 7 zu verstehen ist. Die hier aus den beiden Abschnitten 5.1 und 5.2 bestehende Zugentlastungstülle 5 wird in einer Seitenansicht gezeigt. Sie entspricht im Wesentlichen dem Aufbau in Figur 7. Der Unterschied besteht darin, dass der Spalt 9 nun nicht in einer Ebene parallel zur Axialrichtung a des eingelegten Strangs 2 verläuft, sondern schräg hierzu. Die Abschnitte 5.1 und 5.2 sind weiterhin voneinander beabstandet oder allenfalls über die Filmscharniere 8 verbunden. Sie sind jedoch so angeordnet, dass aufgrund der Schräge ein Durchblick durch die Vorrichtung nicht möglich ist. Damit kann in einem Schaltschrank beispielsweise nicht hineingesehen werden und grober Schmutz wird durch die schräge Anordnung des Spalts 9 verhindert. Dieser Aufbau ließe sich prinzipiell auch so in einer Kombitülle 56 entsprechend einsetzten, also beispielsweise in Ausnehmungen, Einlegen oder mit weicherem Material umspritzen. In der Praxis ist die schräge Anordnung jedoch vor allem beim Aufbau der Zugentlastungstülle 5 aus den beiden Abschnitten 5.1 und 5.2 alleine von Interesse.

Selbstverständlich kann der Aufbau nicht nur so verwendet werden, dass jeweils ein Strang 2 durch die einzelne Tülle hindurchgeführt wird. Rein beispielhaft ist in der Darstellung der Figur 15 ein Aufbau gezeigt, welcher wiederrum analog zu den Zugentlastungstüllen 5 der Figuren 1 bis 9 zu verstehen ist. Er ist dafür ausgelegt vier einzelne Stränge 2, welche hier nicht dargestellt sind, aufzunehmen. Dafür befindet sich in der Darstellung der Figur 15 ein unterer Abschnitt 5.1 mit zwei nebeneinander angeordneten halben Öffnungen für die Stränge 2. Darüber befindet sich ein Abschnitt 5.2 welcher sowohl oben als auch unten zwei halbe Öffnungen für die Stränge 2 hat und darüber findet sich ein Abschnitt 5.3 welcher wiederrum spiegelverkehrt zum Abschnitt 5.1 aufgebaut ist. Dadurch lassen sich beim Verschließen eines Rahmens mit einer Kammer für größere Tüllen hier Stränge in einer Aufnahmekammer und mit einer Zugentlastungstülle 5 gleichzeitig verpressen. Auch hier wäre es prinzipiell denkbar die Abschnitte 5.1, 5.2 und 5.3 einzeln voneinander auszuführen. Besonders sinnvoll ist es wenn diese wiederrum über Filmscharniere 8 miteinander verbunden sind, und zwar vorzugsweise in der Art, wie es hier dargestellt ist, sodass das Filmscharnier 8 zwischen den Abschnitten 5.1 und 5.2 auf der anderen Seite angeordnet ist, als das Filmscharnier 8 zwischen den Abschnitten 5.2 und 5.3. Dadurch lässt sich der Aufbau entsprechend einfach und effizient herstellen, da er insgesamt zu einem längeren Aufbau aufgeklappt werden kann, was bezüglich der Herstellung beispielsweise durch Spritzgießen oder dergleichen von entscheidendem Vorteil ist, da es die Form und das Entformen einfach hält.

Diese Variante lässt sich selbstverständlich mit und ohne die Filmscharniere wieder sowohl bei der reinen Zugentlastungstülle 5 als auch bei einer Kombitülle analog zu der in den Figuren 10 bis 13 entsprechend einsetzen.

## Patentansprüche

1. Vorrichtung (1) zur Durchführung und Zugentlastung von Strängen (2) durch einen Wanddurchbruch mit einem um den und/oder zumindest teilweise in dem Wanddurchbruch angeordneten Rahmen (3), mit wenigstens einer den wenigstens einen der Stränge (2) umschließenden Zugentlastungstülle (5, 56), welche formschlüssig in dem Rahmen (3) aufgenommen ist, wobei der Rahmen (3) wenigstens zwei lösbar verbundene Rahmenteile (3.1, 3.2) aufweist, zwischen welchen die Zugentlastungstülle (5, 56) im verbundenen Zustand der Rahmenteile (3.1, 3.2) direkt oder mittelbar verpresst ist,
**dadurch gekennzeichnet, dass**
die Zugentlastungstülle (5, 56) wenigstens zwei Abschnitte (5.1, 5.2, 5.3) aufweist, welche im verpressten Zustand bei eingelegtem Strang (2) voneinander beabstandet oder allenfalls über wenigstens einen elastischen Bereich verbunden sind, so dass der Kraftfluss zwischen dem wenigstens einen ersten Abschnitt (5.1) und dem wenigstens einen anderen Abschnitt (5.2) über den Strang (2) verläuft.

2. Vorrichtung (1) nach Anspruch 1, **dadurch gekennzeichnet, dass** der Spalt (9) zwischen den wenigstens zwei Abschnitte (5.1, 5.2, 5.3) in einer Ebene parallel oder schräg zur Axialrichtung (a) des eingelegten Strangs (2) verläuft.

3. Vorrichtung (1) nach Anspruch 1 oder 2, **dadurch gekennzeichnet, dass** der wenigstens eine elastische Bereich als eine Filmscharnier (8) ausgebildet ist.

4. Vorrichtung (1) nach Anspruch 1, 2 oder 3, **dadurch gekennzeichnet, dass** die wenigstens zwei Abschnitte (5.1, 5.2, 5.3) von einem weicheren und/oder elastischeren Material als dem aus dem sie bestehen, umgeben und durch dieses Material aufklappbar verbunden sind.

5. Vorrichtung (1) nach Anspruch 4, **dadurch gekennzeichnet, dass** die wenigstens zwei Abschnitte (5.1, 5.2, 5.3) in korrespondierende Öffnungen des weicheren und/oder elastischeren Materials eingesteckt sind.

6. Vorrichtung (1) nach Anspruch 4, **dadurch gekennzeichnet, dass** die wenigstens zwei Abschnitte (5.1, 5.2, 5.3) von dem weicheren und/oder elastischeren Material ganz oder bevorzugt teilweise umspritzt ausgeführt sind.

7. Vorrichtung (1) nach Anspruch 4, 5 oder 6, **dadurch gekennzeichnet, dass** das weichere und/oder elastischere Material im verpressten Zustand dichtend mit dem Rahmen (3), mit sich selbst entlang eines Schlitzes (12) zum Aufklappen und/oder weiteren Tüllen (5, 6, 56) in dem Rahmen (3) zusammenwirkt.

8. Vorrichtung (1) nach Anspruch 1, 2 oder 3, **dadurch gekennzeichnet, dass** die Zugentlastungstülle (5) durch die wenigstens zwei Abschnitte (5.1, 5.2, 5.3) gebildet ist.

9. Vorrichtung (1) nach einem der vorhergehenden Ansprüche, **dadurch gekennzeichnet, dass** die Abschnitte (5.1, 5.2, 5.3) eine Härte von mehr als 75 Shore-A(15s) aufweist.

10. Vorrichtung (1) nach einem der vorhergehenden Ansprüche, **dadurch gekennzeichnet, dass** im Bereich einer Kontaktfläche (10) zwischen dem Strang (2) und den Abschnitten (5.1, 5.2, 5.3) Vorsprünge (11) an den Abschnitten (5.1, 5.2, 5.3) vorgesehen sind.

11. Vorrichtung (1) nach Anspruch 10, **dadurch gekennzeichnet, dass** die Vorsprünge (11) in axialer Richtung (a) und/oder quer zur axialen Richtung (a) des eingelegten Strangs (2) verlaufen.

12. Vorrichtung (1) nach Anspruch 11, **dadurch gekennzeichnet, dass** die Vorsprünge (11) zumindest in Umfangsrichtung des eingelegten Strangs (2) mehrfach durchbrochen sind.

13. Vorrichtung (1) nach einem der Ansprüche 4 bis 12, **dadurch gekennzeichnet, dass** das weichere und/oder elastischere Material eine Härte von weniger als 75 Shore-A(15s) aufweist.

14. Vorrichtung (1) nach einem der vorhergehenden Ansprüche, **dadurch gekennzeichnet, dass** in Axialrichtung (a) des eingelegten Strangs (2) vor oder nach der Zugentlastungstülle (5) eine Dichttülle (6) zur Anlage an dem Strang (2) und zur formschlüssigen Aufnahme in dem Rahmen (3) vorgesehen ist, welche vorzugsweise eine Härte von weniger als 75 Shore-A(15s) aufweist.

15. Vorrichtung (1) nach Anspruch 14, **dadurch gekennzeichnet, dass** die Dichttülle (6) einteilig und entlang der Axialrichtung (a) des eingelegten Strangs (2) aufklappbar ausgebildet ist, wobei im zugeklappten und verpressten Zustand ein Schlitz (12) zwischen den Bereichen der Dichttülle (6) verpresst ist.
